# EUROPEAN PATENT SPECIFICATION

(11) **EP 1 650 478 B1**
(45) Date of publication and mention of the grant of the patent: **05.12.2007**
(21) Application number: 05254921.9
(22) Date of filing: 05.08.2005
(51) Int. Cl.: F16H 61/00, F16H 57/04

(54) **Connection structure of oil passage**
Verbindungsstruktur für einen Ölkanal
Structure de connexion pour un passage d'huile

(30) Priority: 27.08.2004 JP 2004248076
(43) Date of publication of application: 26.04.2006
(73) Proprietor: JATCO Ltd, Fuji-shi, Shizuoka 417-8585 (JP)
(72) Inventor: Matsubara, Kenji c/o Jatco Ltd., Fuji-shi Shizuoka 417-8585 (JP); Taguchi, Hiromi c/o Jatco Ltd., Fuji-shi Shizuoka 417-8585 (JP); Kunii, Yasuhiko c/o Jatco Ltd., Fuji-shi Shizuoka 417-8585 (JP); Amano, Katsutoshi c/o Jatco Ltd., Fuji-shi Shizuoka 417-8585 (JP); Nishiyama, Hiroyuki c/o Jatco Ltd., Fuji-shi Shizuoka 417-8585 (JP)
(74) Representative: Baldwin, Mark

(56) References cited:
- US-A- 4 940 446
- US-A1- 2001 024 994
- US-A1- 2004 065 168

## Description

### BACKGROUND OF THE INVENTION

### Field of the Invention

The present invention relates to a connection structure of oil passages, for instance, in an automatic transmission, according to claim 1.

### Description of the Prior Arts

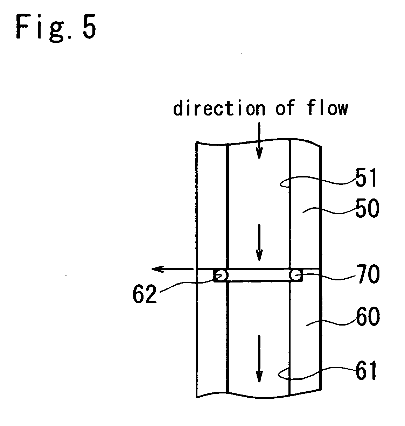

Conventionally, as shown in Fig. 5, when a case-side oil passage 61 provided in a case 60 of an automatic transmission and a member oil passage 51 provided in a member 50 connected to the case 60 are communicated with each other to form a hydraulic circuit, a large diameter part 62 a diameter of which is larger than a bore diameter of the member oil passage 51 is formed in an opening of the case-side oil passage 61. An elastically deformable O-ring 70 is fitted into the large diameter part 62, and the member 50 and the case 60 are fixed each other with opposing positions of the member oil passage 51 and the case-side oil passage 61 be adjusted.

In addition, the O-ring 70 is inserted between the member 50 and the case 60, thus preventing oil leakage from a connection part between the member 50 and the case 60.

As a hydraulic circuit with such construction, there is known a hydraulic circuit in which an oil pump is fixed to a case to connect the hydraulic circuit with the oil pump, as described in Japanese Patent Laid-Open Publication No. 2003-156127. Another such hydraulic circuit is disclosed in the closest prior art document US 2001/0024994 A1 (Taku Sugano). This document discloses a transmission unit comprising a high-pressure oil passage. In the event of a leak, the passage is adapted to prevent oil leaking out to the exterior of the transmission unit.

A sleeve is inserted to the high-pressure oil passage, having several seal members. If oil leaks through these seal members, the leaked oil is then drained through a drain passage into the transmission.

However, in a case where the O-ring 70 is fitted into the large diameter part 62 of the case-side oil passage 61 to fix the member 50 to the case 60, if the O-ring 70 is not fitted by mistake in assembling the member 50 and the case 60, oil leakage in a lateral direction in the figure is generated at a connection part between the member 50 and the case 60. Even if the O-ring 70 is not fitted, since the member oil passage 51 and the case-side oil passage 61 are communicated with each other, a sufficient amount of oil flows from the member oil passage 51 into the case-side oil passage 61, which therefore, makes it difficult to detect the oil leakage.

In a case the member oil passage 51 is a discharge oil passage from the oil pump, high-pressure oil flows therein, which therefore, results in an increase in an adverse influence of the oil leakage.

Moreover, after the member 50 is assembled to the case 60, it is difficult to detect whether the 0-ring 70 is fitted therein or not.

In view of the above, there exists a need for a connection structure of oil passages which overcomes the above-mentioned problems in the related art. The present invention addresses this need in the related art as well as other needs, which will become apparent to those skilled in the art from this disclosure.

### SUMMARY OF THE INVENTION

In view of the foregoing problems, it would be desirable to provide a connection structure of oil passages, which can easily detect absence of an o-ring therein.

According to a first embodiment of the present invention, a connection structure of oil passages comprises a first oil passage-forming member forming a first oil passage therein, a second oil passage-forming member connected to said first oil passage-forming member and forming therein a second oil passage to be connected to said first oil passage, and a seal member disposed between said first oil passage-forming member and said second oil passage-forming member, for keeping an oil seal between said first oil passage and said second oil passage, wherein the first oil passage has a large diameter part which has a diameter larger than a bore diameter of said second oil passage and which is formed in an opening of said first oil passage at a connection side with said second oil passage for fitting said seal member, and a channel is formed to extend from said large diameter part of said first oil passage to an outside of said first oil passage-forming member in a radial direction from said large diameter part of said first oil passage for connecting said first oil passage and said outside of the first oil passage-forming member, and wherein said seal member blocks communication between said first oil passage and said outside of the first oil passage-forming member through said channel, thereby keeping said oil seal between said first oil passage and said second oil passage.

According to the present invention, since the channel is formed extending in the radial direction from the large diameter part of the first oil passage to fit the seal member therein, in a case the first and second oil passages are connected without the seal member fitted in the large diameter part and then the oil is supplied therein with, the oil leaks from the channel and as a result, an oil pressure in the first and second oil passages is not increased.

As described above, since the oil positively leaks from the channel when the seal member is not assembled, the oil pressure in the first and second oil passages is not increased, whereby absence of the seal member can be easily detected.

These and other features, embodiments and advantages of the present invention will be become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Fig. 1 is a cross-sectional view showing a periphery of an oil pump of a continuously variable transmission;
Fig. 2 is a front view showing a seat part viewed from an oil pump side;
Fig. 3A is a cross-sectional view showing a state where a discharge hole and a case-side oil passage are communicated with each other and an O-ring is assembled in a large diameter part;
Fig. 3B is a cross-sectional view showing a state where a discharge hole and a case-side oil passage are communicated with each other and an O-ring is not fitted in a large diameter part;
Fig. 4 is a front view showing a periphery of the seat part of a continuously variable transmission; and
Fig. 5 is a view showing a connecting part of oil passages in the conventional connection structure.

### DETAILED DESCRIPTION OF THE PREFERRED EMBODIMENT

An embodiment of the present invention will be described with reference to the drawings.

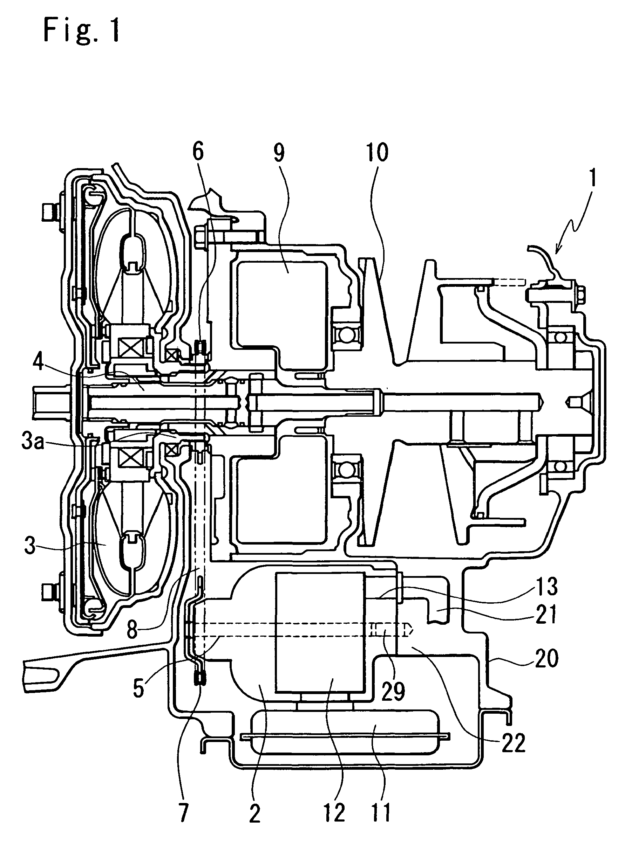

Fig. 1 is a cross-sectional view showing a periphery of an oil pump in a continuously variable transmission.

A continuously variable transmission 1 to which power from an engine is inputted is provided with an input shaft 4 to which the power from the engine is inputted through a torque converter 3, a forward/reverse switching mechanism part 9 to switch a rotation direction of the power which is inputted to the input shaft 4 and a transmission mechanism part 10 which converts a rotation speed of the input shaft 4 and transmits the converted rotation to drive wheels of a vehicle (not shown).

Further, an oil pump 2 driven by a rotational force of a sleeve 3a which is disposed coaxially with the input shaft 4 and connected to an impeller of the torque converter 3 is arranged in such a way that an oil pump rotation shaft 5 is in parallel to the input shaft 4.

Between the torque converter 3 and the forward/reverse switching mechanism part 9, a drive sprocket 6 is fixed on a periphery of the sleeve 3a. A chain 8 is wound between and around the drive sprocket 6 and a driven sprocket 7 fixed on an oil pump rotation shaft 5 of the oil pump 2, thereby to drive the oil pump 2.

An end of the oil pump 2 opposite to a side thereof in which the driven sprocket 7 is provided is connected to a transmission case 20 of the continuously variable transmission 1 to fix the oil pump 2 to the transmission case 20.

An oil strainer 11 is connected to a lower side of the oil pump 2 and the oil pump 2 pumps oil accumulated on the lower side of the continuously variable transmission 1 through the oil strainer 11 and the oil is pressurized by a pressurizing mechanism part 12 in the oil pump 2 and then discharged through a discharge hole 13.

A seat part 22 is formed in the transmission case 20 at a position where the oil pump 2 is in contact with the transmission case 20, and a case-side oil passage 21 communicating with the discharge hole 13 of the oil pump 2 is formed in the seat part 22. The oil discharged from the discharge hole 13 of the oil pump 2 is supplied from the case-side oil passage 21 provided in the seat part 22 to a transmission mechanism part 10 or the like.

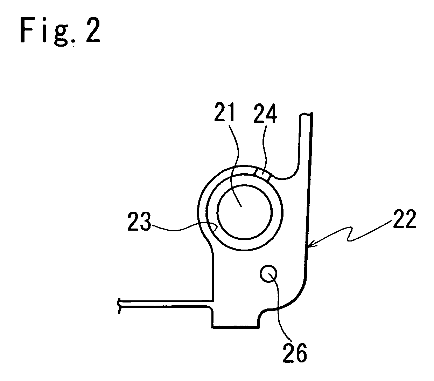

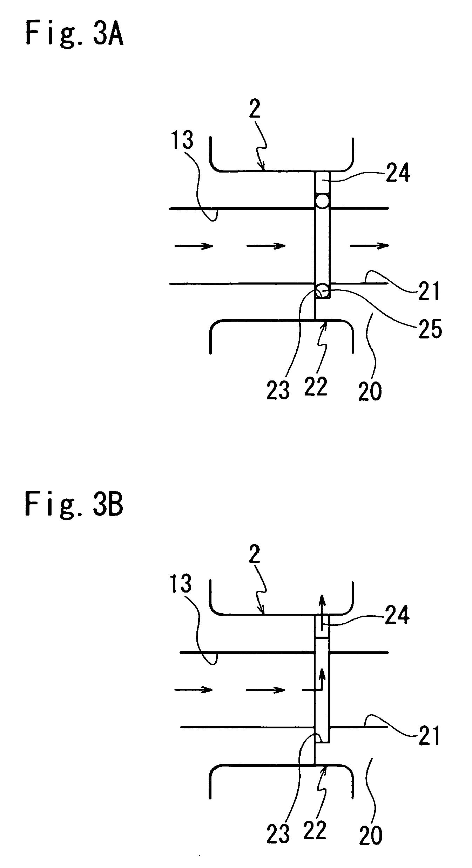

Fig. 2 is a front view showing the seat part 22 viewed from a side of the oil pump 2. Fig. 3A is a cross-sectional view showing a state where the discharge hole and the case-side oil passage are communicated with each other and an O-ring is fitted.

As shown in Fig. 2, a knock pin hole 26 in which a knock pin 29 for positioning arranged on the same axis as the oil pump rotation shaft 5 of the oil pump 2 is inserted and the case-side oil passage 21 are formed in the seat part 22.

In an opening of the case-side oil passage 21 at the side of the oil pump 2A, a large diameter part 23 of which a bore diameter is made larger than that of the rest of the case-side oil passage 21 is formed.

The seat part 22 is provided with a notch 24 which is formed by cutting out the seat part 22 in a radial direction from the large diameter part 23 to an outer peripheral surface of the seat part 22. The notch 24 forms a channel connecting the case-side oil passage 21 and the outer peripheral surface of the seat part 22.

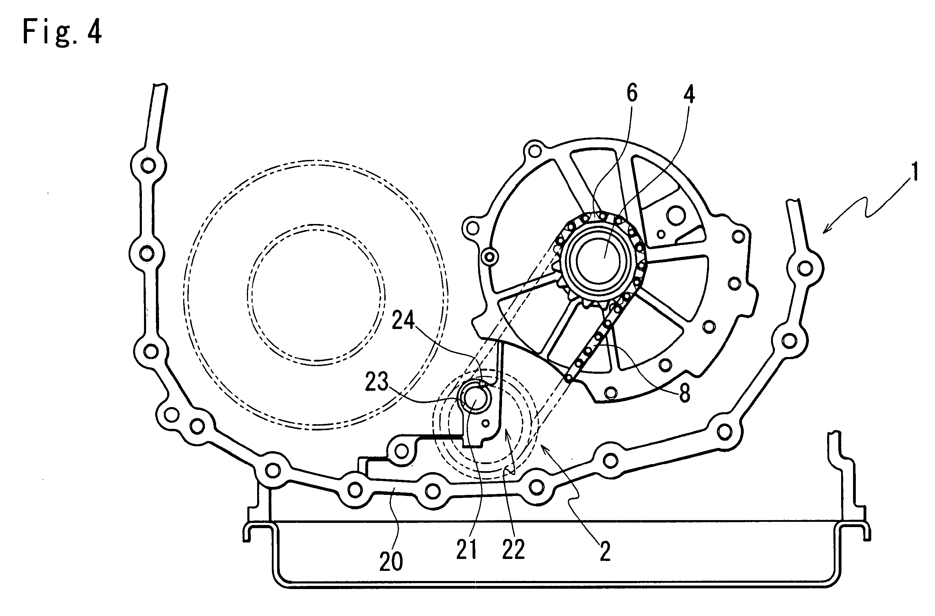

It should be noted that the notch 24 is provided at a side of the drive sprocket 6 in a circumference of the large diameter part 23 as shown in Fig. 4.

Furthermore, in the present embodiment, a width in a circumferential direction of the notch 24 formed at an outer diameter side of the large diameter part 23 is designed to be approximately equal to a width of the large diameter part 23 in a radial direction.

As shown in Fig. 3A, an installation of the oil pump 2 to the transmission case 20 is performed in such a way that an O-ring 25 is fitted into the large diameter part 23 of the transmission case 20, and the discharge hole 13 of the oil pump 2 and the case-side oil passage 21 are adjusted to be in alignment with each other, thus fixing the oil pump 2 to the transmission case 20.

Use of the O-ring 25 prevents the oil from leaking through a connecting part between the case-side oil passage 21 and the discharge hole 13 that are communicated with each other.

In the present embodiment constructed as described above, the large diameter part 23 is formed in the case-side oil passage 21 of the transmission case 20 and the O-ring 25 is fitted into the large diameter part 23, and the oil pump 2 is installed to the transmission case 20 by adjusting the discharge hole 13 and the case-side oil passage 21 in alignment with each other.

The notch 24 which is formed by cutting out a part of the seat part 22 in a radial direction from the large diameter part 23 to the outer peripheral surface of the seat part 22 is provided on a contact surface of the seat part 22 with the oil pump 2.

When the discharge hole 13 of the oil pump 2 and the case-side oil passage 21 are communicated with each other without the O-ring 25 fitted into the large diameter part 23, the oil discharged from the oil pump 2 passes through the discharge hole 13 and leaks from the notch 24 as shown in Fig. 3B.

As described above, in a state where the O-ring 25 is not assembled in the large diameter part 23, the oil positively leaks from the notch 24, and thus, a hydraulic pressure in an oil path formed of the discharge hole 13 and the case-side oil passage 21 is not increased. As a result, it is possible to easily detect the absence of the O-ring 25 when the O-ring 25 is not assembled by mistake.

Additionally, since the notch 24 is formed in the connecting part between the discharge hole 13 of the oil pump 2 and the transmission case 20 where a large amount of oil leakage due to a higher oil pressure is generated, it is possible to certainly detect that the O-ring 25 is not assembled by mistake, and thus the oil leakage is prevented.

Furthermore, the notch 24 is provided in the large diameter part 23 at the side of the drive sprocket 6. As a result, even in a case where the oil pump 2 is biassed and pulled toward the side of the drive sprocket 6 by the chain 8 and is inclined to the side of the drive sprocket 6 to part from the seat part 22 when the oil pump 2 is driven, it is possible to prevent occurrence of the event that the oil leaks from the notch 24 despite installation of the O-ring 25.

Moreover, the continuously variable transmission 1 (for instance, a belt-type continuously variable transmission or a toroidal-type continuously variable transmission) according to the present embodiment allows a higher hydraulic pressure generated by the oil pump as compared to an automatic transmission with a friction plate. Therefore, it is especially preferable that the notch 24 in the present embodiment of the present invention is formed at the connecting part between the oil pump 2 and the transmission case 20.

It should be noted that in the present embodiment a depth of the notch 24 is equal to a length from a surface of the large diameter part 23 on which the O-ring 25 is mounted to a surface of the seat part 22 in contact with the oil pump 2, but not limited to it. For instance, the depth of the notch 24 may be formed greater than the length from the surface of the large diameter part 23 on which the O-ring 25 is mounted to the surface of the seat part 22 in contact with the oil pump 2. Additionally in this case, a part of the surface of the large diameter part 23 on which the O-ring 25 is mounted may be notched, thereby to produce the notch 24.

Further, the present embodiment is so constructed that the O-ring 25 is fitted into the large diameter part 23 of the transmission case 20, but a recessed portion corresponding to the large diameter part 23 may be provided at the side of the oil pump 2 to fit the O-ring 25 into the recessed portion. In this case, the notch 24 is also provided in the recessed portion at the side of the oil pump 2.

Furthermore, the notch 24 is positioned at the side of the drive sprocket 6 of the large diameter part 23 in the present embodiment, but is not limited to this position, and the notch 24 may be provided at any desired position according to various types of designs. For instance, the notch 24 may be provided at a predetermined position so as to recognize leaked oil visually or at a position to make manufacturing thereof easier.

Further, according to the present embodiment, since the oil pump 2 is not limited to a particular type, a general oil pump such as a gear pump or a vane pump may be used. Specifically, in the case of using a vane pump that has high discharge efficiency and compact size as an oil pump, and outputs a high discharge pressure, an adverse effect due to oil leakage is increased, the present invention is more advantageous.

It should be noted that the connection structure of oil passages of the present embodiment is shown as applied to the continuously variable transmission 1, but it is obvious that the present invention can be applied to, for instance, a stepped automatic transmission or various types of equipment with a connection structure of the oil passages.

It will be apparent to those skilled in the art from this disclosure that the above description of the embodiment of the present invention is provided for illustration only, and not for the purpose of limiting the invention as defined by the appended claims

## Claims

1. A connection structure of oil passages, comprising:
a first oil passage-forming member (20) forming a first oil passage (21) therein;
a second oil passage-forming member (2) connected to said first oil passage-forming member and forming therein a second oil passage (13) to be connected to said first oil passage; and
a seal member (25) disposed between said first oil passage-forming member and said second oil passage-forming member, for keeping an oil seal between said first oil passage and said second oil passage; wherein
the first oil passage has a large diameter part (23) which has a diameter larger than a bore diameter of said second oil passage, and which
is formed in an opening of said first oil passage at a connection side with said second oil passage for fitting said seal member; and
a channel (24) is formed to extend from said large diameter part of said first oil passage to an outside of said first oil passage-forming member in a radial direction from said large diameter part of said first oil passage for connecting said first oil passage and said outside of the first oil passage-forming member; and wherein
said seal member blocks communication between said first oil passage and said outside of the first oil passage-forming member through said channel, thereby keeping said oil seal between said first oil passage and said second oil passage.

2. A connection structure of oil passages according to claim 1, wherein:
said first oil passage-forming member (20) and said second oil passage-forming member (2) form a part of an automatic transmission including an oil pump (2); and
a connecting part between said first oil passage and said second oil passage includes a part on which a hydraulic pressure discharged from said oil pump is exerted.

3. A connection structure of oil passages according to claim 2, wherein:
one of said first oil passage and said second oil passage is a discharge hole(13) of said oil pump(2); and
the other of said first oil passage and said second oil passage is an oil passage(21) which is provided in a transmission case(20), and to which said discharge hole of the oil pump is connected.

4. A connection structure of oil passages according to claim 3, wherein:
said channel(24) is formed in a circumferential direction of said large diameter part (23) at a side to which said oil pump (2) is biased to incline by an external force generated when said oil pump is driven.

5. A connection structure of oil passages according to any one of claims 2-4, wherein:
said automatic transmission is a continuously variable transmission.

## Patentansprüche

1. Verbindungsstruktur für Ölkanäle, umfassend:
ein erstes ölkanalbildendes Teil (20), das einen ersten Ölkanal (21) darin ausbildet;
ein zweites ölkanalbildendes Teil (2), das an das erste ölkanalbildende Teil angeschlossen ist und einen zweiten Ölkanal (13) darin ausbildet, welcher an den ersten Ölkanal angeschlossen sein soll; und
ein Dichtungsteil (25), das zum Bewahren einer Öldichtung zwischen dem ersten Ölkanal und dem zweiten Ölkanal zwischen dem ersten ölkanalbildenden Teil und dem zweiten ölkanalbildenden Teil angeordnet ist, wobei
der erste Ölkanal ein Teil (23) mit großem Durchmesser aufweist, das einen Durchmesser aufweist, welcher größer als ein Bohrungsdurchmesser des zweiten Ölkanals ist, und das
in einer Öffnung des ersten Ölkanals an einer Anschlussseite mit dem zweiten Ölkanal zum Anbringen des Dichtungsteils ausgebildet ist, und
ein Durchgang (24) zum Verlaufen von dem Teil mit großem Durchmesser des ersten Ölkanals zu einer Außenseite des ersten ölkanalbildenden Teils in einer radialen Richtung von dem Teil mit großem Durchmesser des ersten Ölkanals zum Verbinden des ersten Ölkanals und der Außenseite des ersten ölkanalbildenden Teils ausgebildet ist, und wobei
das Dichtungsteil die Verbindung zwischen dem ersten Ölkanal und der Außenseite des ersten ölkanalbildenden Teils durch den Durchgang sperrt, wodurch die Öldichtung zwischen dem ersten Ölkanal und dem zweiten Ölkanal bewahrt ist.

2. Verbindungsstruktur für Ölkanäle nach Anspruch 1, wobei:
das erste ölkanalbildende Teil (20) und das zweite ölkanalbildende Teil (2) ein Teil eines Automatikgetriebes mit einer Öl-pumpe (2) ausbilden, und
ein Verbindungsteil zwischen dem ersten Ölkanal und dem zweiten Ölkanal ein Teil beinhaltet, auf das ein Hydraulikdruck ausgeübt ist, der von der Ölpumpe freigesetzt ist.

3. Verbindungsstruktur für Ölkanäle nach Anspruch 2, wobei:
einer des ersten Ölkanals und des zweiten Ölkanals ein Ablassloch (13) der Ölpumpe (2) ist, und
der andere des ersten Ölkanals und des zweiten Ölkanals ein Ölkanal (21) ist, der in einem Getriebekasten vorgesehen ist und an den das Ablassloch der Ölpumpe angeschlossen ist.

4. Verbindungsstruktur für Ölkanäle nach Anspruch 3, wobei:
der Durchgang (24) in einer Umfangsrichtung des Teils (23) mit großem Durchmesser an einer Seite ausgebildet ist, an die die Ölpumpe (2) durch eine äußere Kraft, die erzeugt ist, wenn die Ölpumpe betrieben ist, zur Neigung vorgespannt ist.

5. Verbindungsstruktur für Ölkanäle nach einem der Ansprüche 2 bis 4, wobei:
das Automatikgetriebe ein stufenloses Getriebe ist.

## Revendications

1. Structure de connexion de passages d'huile, comprenant :
un premier élément formant passage d'huile (20) dans lequel est formé un premier passage d'huile (21) ;
un deuxième élément formant passage d'huile (2), connecté audit premier élément formant passage d'huile et dans lequel est formé un deuxième passage d'huile (13) destiné à être connecté audit premier passage d'huile ; et
un élément d'étanchéité (25) placé entre ledit premier élément formant passage d'huile et ledit deuxième élément formant passage d'huile, pour maintenir un joint d'huile entre ledit premier passage d'huile et ledit deuxième passage d'huile ; dans laquelle
le premier passage d'huile a une partie de grand diamètre (23) qui a un diamètre plus grand qu'un diamètre d'alésage dudit deuxième passage d'huile, et qui est formée dans une ouverture dudit premier passage d'huile d'un côté de connexion avec ledit deuxième passage d'huile pour monter ledit élément d'étanchéité ; et
un canal (24) est formé de façon à s'étendre de ladite partie de grand diamètre dudit premier passage d'huile à une partie extérieure dudit premier élément formant passage d'huile dans une direction radiale depuis ladite partie de grand diamètre dudit premier passage d'huile pour relier ledit premier passage d'huile et ladite partie extérieure du premier élément formant passage d'huile ; et dans laquelle
ledit élément d'étanchéité bloque la communication entre ledit premier passage d'huile et ladite partie extérieure du premier élément formant passage d'huile via ledit canal, maintenant ainsi ledit joint d'huile entre ledit premier passage d'huile et ledit deuxième passage d'huile.

2. Structure de connexion de passages d'huile selon la revendication 1, dans laquelle :
ledit premier élément formant passage d'huile (20) et ledit deuxième élément formant passage d'huile (2) forment une partie d'une transmission automatique incluant une pompe à huile (2) ; et
une partie de connexion entre ledit premier passage d'huile et ledit deuxième passage d'huile comprend une partie sur laquelle est appliquée une pression hydraulique rejetée par ladite pompe à huile.

3. Structure de connexion de passages d'huile selon la revendication 2, dans laquelle :
l'un desdits premier et deuxième passages d'huile est un trou de refoulement (13) de ladite pompe à huile (2) ; et
l'autre desdits premier et deuxième passages d'huile est un passage d'huile (21) qui est prévu dans un carter de transmission (20), et auquel est connecté ledit trou de refoulement de la pompe à huile.

4. Structure de connexion de passages d'huile selon la revendication 3, dans laquelle ledit canal (24) est formé dans une direction périphérique de ladite partie de grand diamètre (23) d'un côté vers lequel ladite pompe à huile (2) est poussée à s'incliner par une force extérieure générée lorsque ladite pompe à huile est entraînée.

5. Structure de connexion de passages d'huile selon l'une quelconque des revendications 2 à 4, dans laquelle ladite transmission automatique est une transmission à variation continue.
